# EUROPEAN PATENT APPLICATION

(11) **EP 1 060 781 A1**
(43) Date of publication of application: **20.12.2000**
(21) Application number: 00305120.8
(22) Date of filing: 16.06.2000
(51) Int. Cl.: B01D 53/04

(54) **Vessel and absorption instrument using the vessel**

(30) Priority: 17.06.1999 JP 17120599
(71) Applicant: HITACHI CHEMICAL CO., LTD., Shinjuku-ku, Tokyo (JP)
(72) Inventor: Aoyama, Tetsuya, Hitachi-shi, Ibaraki-ken (JP); Butsugan, Michio, Hitachi-shi, Ibaraki-ken (JP); Kumagai, Yuugo, Hitachi-shi, Ibaraki-ken (JP); Inoue, Yoshinori, Mitaka-shi, Tokyo (JP)
(74) Representative: West, Alan Harry

(57) **Abstract**

A vessel to be filled with an absorbent is composed of a porous material obtained by sintering or fusing resin particles comprising at least one resin selected form polyethylene, polypropylene, polystyrene, polyesters and fluorinated resins. An absorption instrument comprises the vessel filled with an absorbent. By using the vessel, it is possible to absorb and concentrate chemical substances to be measured within a short period of time with good efficiency, reproducibility, convenience in handling and performance.

## Description

The present invention relates to a vessel and an absorption instrument using the vessel.

Environmental pollution by toxic chemical substances may cause severe problems such as chronic disorder and carcinogenesis by long term exposure to the substances, even if the level of the toxic chemicals is as low as µg/L. The chemical substances have different toxicity and reactivity depending on the differences in the kind of substituents, substitution sites and valences. Therefore, highly sensitive separation and analysis methods such as gas chromatography, gas chromatography-mass spectrometry and liquid chromatography have been used for the very low polluting chemical substances in assessing their concentration in the environment, their environmental dynamics, their effects on human being upon exposure and their effects on human health, for example.

However, it is difficult to accurately quantify the pg/L level of the chemical substances by directly introducing the test samples, even when the analytical methods as described above are used. Accordingly, a pre-treatment using some concentration means is inevitable.

Moreover, since environmental and biological samples contain a variety of concomitants, it is often difficult to accurately and stably quantify the objective sample components (substances to be measured) due to interference among the concomitants and the objective components. Consequently, a pre-treatment method for selectively concentrating the substances to be measured is required.

Although the methods using solvent desorption and solvent absorption have been utilized as the pre-treatment methods capable of concentrating, many other methods have been developed for complying with the requirement of more sanitary concentration method.

Representative examples of the methods include a solid extraction method for liquid samples, and an absorption tube or absorption filter for gaseous samples. These methods belong to a pre-treatment method for concentration taking advantage of affinity of the substances to be measured with solid absorbents, which are further classified into an active sampling method and a passive sampling method.

An absorption instrument is used for the passive sampling method to be used for selective trapping and concentration of gas components, in which gas-absorbent (absorbent that absorbs gas) is filled in a vessel covered with a gas-permeation film or in a vessel made of a gas-permeation material.

The representative of the gas-permeation material is a non-woven fabric. Japanese Examined Patent Application Publication No. 7-114911 discloses use of a tubular vessel, made of a porous material processed by stretching an extruded tube of polytetrafluoroethylene (PTFE), as a gas-permeation vessel containing the gas-absorbent.

Japanese Unexamined Patent Application Publication No. 10-321 also discloses that absorption efficiency can be improved by using a sheet, manufactured by laminating a porous film obtained by stretching a polytetrafluoroethylene (PTFE) film and a gas-permeation cloth, as a vessel for the absorbent.

In the conventional active sampling method, the absolute absorption quantity is essentially proportional to the amount of the absorbent used, and the processing efficiency depends on the inner diameter of the absorption vessel. Since the absorption vessel itself is usually used for the vessel for extraction or heat-desorption, the flow-through rate is defined by the inner diameter of the absorption vessel. The heat-desorption vessel generally has an inner diameter of about 4 mm. As a result, the trapping and concentration time is prolonged when a heat-desorption vessel having a small inner diameter is used.

In the case of the passive sampling method, on the other hand, the permeation resistance becomes to be large hence decreasing the absorption rate when the pore diameter of the gas permeation material is small. While PTFE subjected to biaxial stretching has advantages of high tensile strength and tear strength, it is a soft material that is readily deformed. Since the passive sampling method is based on an assumption that the exposure area is constant, the deformable material may possibly cause a problem in reproducibility.

It is therefore an object of the present invention to provide a vessel which enables one to absorb and concentrate chemical substances to be measured within a short period of time with good efficiency, reproducibility, convenience in handling and performance, and which is quite suitable for largely improving the absorption efficiency of the chemical substances to be measured when used for an absorption instrument.

An another object of the present invention is to provide an absorption instrument capable of absorbing and concentrating chemical substances to be measured within a short period of time with good efficiency, reproducibility, convenience in handling and performance, thereby enabling one to largely improve the absorption efficiency of the chemical substances to be measured.

The present invention provides a vessel for use as a container of an absorbent, which is to be filled with an absorbent and composed of a porous material obtained by sintering or fusing resin particles comprising at least one resin selected from polyethylene, polypropylene, polystyrene, polyester and fluorinated resins.

Preferably, the porous material has a pore size in a range of 0.5 to 100 µm.

The present invention also provides an absorption instrument, for use in a process for absorbing chemical substances, comprising the vessel according to the present invention filled with an absorbent.

The vessel to be filled with the absorbent according to the present invention should be composed of a porous material obtained by sintering or fusing resin particles comprising at least one resin selected from polyethylene, polypropylene polystyrene, polyesters and fluorinated resins. These resins can be used singly or in combination. The chemical substances to be measured can pass through the vessel by taking advantage of molecular diffusion characteristics afforded by the porous material.

The porous material obtained by sintering or fusing the resin particles comprising at least one resin selected form polyethylene, polypropylene polystyrene, polyesters and fluorinated resins has good elasticity, is rigid and hardly deformable as compared with the PTFE stretched material, and is able to prepare a gas-permeation material having a large pore size and a large pore ratio, thereby realizing an absorption vessel having an excellent absorption ratio.

The resin particles described above preferably have a mean particle size in a range of 10 to 100 µm, more preferably 20 to 80 µm, and most preferably 20 to 60 µm. When the particle size is less than 10 µm, the gas permeability can decrease (the permeation resistance can increase) and the absorption rate tends to decrease, while the absorbent tends to leak out and the mechanical strength of the vessel formed can decrease when the particle size is more than 100 µm. The pore size of the porous material described above is preferably within a range of 0.5 to 100 µm, and more preferably within a range of 1.0 to 70 µm. When the pore size is less than 0.5 µm, the permeation resistance can be increased and the absorption rate tends to decrease, while the absorbent tends to leak out when the pore size is more than 100 µm.

The thickness of the porous material is preferably 0.1 to 6.0 mm, more preferably 0.2 to 5.0 mm, and most preferably 0.5 to 4.0 mm in view of reproducibility. Strength of the porous material tends to be insufficient when the thickness is less than 0.1 mm, while the absorption rate tends to decrease due to increased permeation resistance when the thickness exceeds 6.0 mm.

The pore ratio of the porous material is preferably in a range of 20 to 70%, and more preferably in a range of 30 to 50%. When the pore ratio is less than 20%, the permeation resistance can increase and the absorption rate tends to decrease while, when the pore ratio exceeds 70%, strength of the material tends to be insufficient.

The ventilation characteristics of the porous material can be optimized by appropriately combining such parameters mentioned above according to the state of the test sample and characteristics of the substances to be measured.

Various modifications can be made in the vessel to be filled with the absorbent, whereby the vessel can be used for absorption and concentration of a variety of chemical substances in the test sample.

Examples of the shape of the vessel include polygonal columns such as a triangular column and a square column, a circular column, a sphere, and those having an opening on respective shapes above. A vessel having an opening is preferable from a viewpoint of efficiency and handling of the substances to be measured in analysis. More preferable vessel is a dish shaped or cup shaped vessel (such as circular column having an opening), and the dish shaped vessel is most preferable in view of large contact area.

It is preferable that an absorbent receiver for the heat desorption or solvent desorption is placed above the opening of the vessel in view of handling in analysis. A gas or solvent permeable filter is also preferably placed above the opening of the vessel. It is also possible to seal the upper part of the opening of the vessel with a removable substance having no permeability to the gas and liquid.

Examples of the removable substances include, for example, resin, metal and glass. Resin or metal is preferable in view of easy handling in analysis. Examples of the resins include polyethylene, polypropylene, polystyrene, polyesters and fluorinated resins.

The vessel can be manufactured by the steps comprising, for example, uniformly filling the resin particles in a mold for the vessel, heating the mold at a temperature within the range of the glass transition temperature to the softening temperature, keeping the temperature for about 5 to 20 minutes, sintering or fusing the resin particles by thermal expansion, and cooling the particles.

The preferable heating temperature can be within a range of the glass transition temperature of the resin to the softening temperature of the resin. While the preferable temperature differs depending on the material of the resin particles, a temperature range of 80 to 140°C is preferable when polystyrene is used for the resin particles, a temperature range of 140 to 200°C is preferable when polyethylene is used for the resin particles, a temperature range of 170 to 230°C is preferable when polypropylene is used for the resin particles, and a temperature range of 180 to 270°C is preferable when a fluorinated resin is used for the resin particles.

The cooling method can be natural cooling or cooling using a cooling fan, for example.

Absorbents known in the art can be used for the absorbent to be used in the present invention, which can be selected depending on the characteristics of the chemical substances to be measured. Examples of the absorbent applicable include a porous carbon absorbent (used for absorption and concentration of volatile organic compounds in the air), a polymer absorbent or a carbon absorbent with a decreased surface area (used for absorption and concentration of high boiling point substances), an absorbent impregnated with 2,4-dinitrophenyl hydrazine or triethanol amine ( used for absorption and concentration of aldehydes and ketones), and a polymer absorbent or a silica gel absorbent modified with functional groups (used for absorption and concentration of agricultural chemicals).

Examples of these absorbents include inorganic absorbents such as activated carbon, zeolite, alumina, magnesia, silica gel, silica gel modified with functional groups, and other metal oxides; polymer absorbents such as porous polystyrene and its derivatives, porous polyester and its derivatives, and porous polyvinyl alcohol and its derivatives; and carbon absorbents comprised of partly or totally carbonized polymer absorbents. They can be applied singly or in combination depending on the characteristics of the substances to be measured.

These absorbents can be used as a supporting media that is impregnated with an absorbing solvent, a polymer, a solid and the like, for immobilizing them.

For example, the absorbent is filled in a tubular or syringe type vessel provided with a filter for use in pre-treatment for concentration.

Chemical substances to be measured can be concentrated by absorption using an absorption instrument according to the present invention based on the active sampling method and passive sampling method.

In the active sampling method, the test sample is allowed to pass through the vessel filled with the absorbent by suction or pressurizing, and the substances to be measured are concentrated by absorption on the surface or in the pore of the absorbent due to their affinity with the absorbent.

In the passive sampling method, the surface of the vessel filled with the absorbent and comprised of the porous material is allowed to contact the test sample. When chemical substances in the room air are to be absorbed, for example, the surface of the vessel filled with the absorbent is directed toward upward and the absorption instrument is placed at a designated site in the room. After allowing the instrument to stand for a given time, the absorption instrument is stored in a sealed vessel. Then, the absorbent is placed in an appropriate receiver in the assay room and, after eluting the chemical substances to be measured by desorption, they are identified and quantified by, for example, liquid chromatography, gas chromatography and gas chromatography-mass spectrometry.

When the chemical substances in water are concentrated by absorption, the absorption instrument is dipped in an aqueous test sample solution. After allowing to stand for a given time, the absorption instrument is retrieved to subject it to an appropriate analytical method in the assay room thereafter.

The following Examples illustrate the invention.

### Example 1

Ultrahigh density polyethylene particles with a mean particle size of 50 µm were uniformly filled in a mold. The mold was kept at a temperature of 160°C for 15 minutes. After cooling with a cooling fan, a dish-shaped porous vessel with an outer diameter of 25 mm, an inner diameter of 23 mm, an effective depth of 2.0 mm, a wall thickness of 1.0 mm, a pore size of 0.1 to 50 µm and a pore ratio of 45% was manufactured. Following the method described in US EPA Compendium Method TO-11, 1988, an absorbent was prepared by bonding 2,4-dinitrophenyl hydrazine (DNPH) to the surface of a sulfonated porous polystyrene gel having a particle size of 50 µm, and 250 mg of this absorbent was filled in the vessel described above. An absorption instrument was manufactured by covering the foregoing vessel with the same porous material as used in the vessel.

Formaldehyde and acetaldehyde in water were concentrated by absorption using the absorption instrument with reference to the description in Analytical Chemistry, vol. 57, p. 243, 1985.

The absorption instrument was equipped in a filter holder with a diameter of 25 mm, and the test sample solution was sucked into the vessel. The flow speed of the sample solution was 20 ml/min.

After allowing the sample solution to pass through the vessel, excess water was removed by passing dry nitrogen through the vessel, followed by elution of DNPH derivatives with acetonitrile. The eluted 2,4-dinitrophenyl hydrazine derivatives of formaldehyde and acetaldehyde were quantified by liquid chromatography as described in US EPA Compendium Method TO-11, 1988. The results are listed in TABLE 1.

**TABLE 1**

| COMPOUND | AMOUNT OF SAMPLE ADDED | VOLUME OF SAMPLE SOLUTION | | |
|---|---|---|---|---|
| | | 100 ml | 200 ml | 500 ml |
| FORMALDELYDE | 5.0 µg | 96.50% | 96.10% | 97.30% |
| ACETOALDEHYDE | 5.0 µg | 98.70% | 99.60% | 98.00% |

As is evident from TABLE 1, aldehydes in water could be concentrated by absorption in high recovery rate using the absorption instrument according to the present invention.

### Example 2

Ultrahigh density polyethylene particles with a mean particle size of 50 µm were uniformly filled in a mold. The mold was kept at a temperature of 160°C for 15 minutes. After cooling with a cooling fan, a spherical porous vessel with an outer diameter of 25 mm, an inner diameter of 23 mm, a wall thickness of 1.0 mm, a pore size of 0.1 to 50 µm and a pore ratio of 45% was manufactured. The vessel was cut into a half each. Following the method described in US EPA Compendium Method TO-11, 1988, an absorbent was prepared by bonding 2,4-dinitrophenyl hydrazine (DNPH) to the surface of a sulfonated porous polystyrene gel having a particle size of 50 µm, and 250 mg of this absorbent was filled in the vessel described above. Respective half-sphere vessels were bonded to form a spherical absorption instrument.

Formaldehyde and acetaldehyde in water were concentrated by absorption by the same method as in Example 1, and they were quantified by liquid chromatography, showing that concentration of aldehydes in water was possible with high recovery rates as in Example 1.

As described, according to the present invention, it is possible to absorb and concentrate chemical substances to be measured within a short period of time with good efficiency, reproducibility, convenience in handling and performance. Therefore, the vessel according to the invention is quite suitable for an absorption instrument, and the absorption instrument according to the invention is quite effective in largely improving the absorption efficiency of the chemical substances to be measured.

## Claims

1. A vessel to be filled with an absorbent, the vessel being composed of a porous material obtained by sintering or fusing resin particles comprising at least one resin selected form polyethylene, polypropylene, polystyrene, polyesters and fluorinated resins.

2. A vessel according to Claim 1, wherein the porous material has a pore size in a range of 0.5 to 100 µm.

3. An absorption instrument comprising the vessel according to Claim 1 or Claim 2 filled with an absorbent.
